# EUROPÄISCHE PATENTANMELDUNG

(11) **EP 1 275 600 A1**
(43) Veröffentlichungstag der Anmeldung: **15.01.2003**
(21) Anmeldenummer: 01115790.6
(22) Anmeldetag: 11.07.2001
(51) Int. Cl.: B65G 37/02, B23Q 7/14

(54) **Vorrichtung zum Zuführen von Gegenständen an eine Verarbeitungseinheit, insbesondere Druckmaschine**

(71) Anmelder: Westfalia-WST-Systemtechnik GmbH & Co. KG, 33829 Borgholzhausen (DE)
(72) Erfinder: Upmeyer, Ulrich, Industriestrasse 11, 33829 Borgholzhause (DE)
(74) Vertreter: Philipp, Matthias, Dr.

(57) **Zusammenfassung**

Vorrictung zum Zuführen von Gegenständen (14) an eine Verarbeitungseinheit (10), mit einem ersten Lager (16) für die Gegenstände, das entlang einer ersten Seite der Verarbeitungseinheit (10) angeordnet ist und einen ersten Förderweg (16A) aufweist, auf dem mindestens ein Transportfahrzeug (20) zum Einlagern, Aufnehmen und Ausgeben von Gegenständen (14) in das und aus dem Lager (16) verfahrbar ist, und mit einem zweiten Lager (18) für die Gegenstände, das entlang einer zweiten Seite der Verarbeitungseinheit (10) angeordnet ist und einen zweiten Förderweg (18A) aufweist, auf dem mindestens ein Transportfahrzeug (22) zum Einlagern, Aufnehmen und Ausgeben von Gegenständen in das und aus dem zweiten Lager (18) verfahrbar ist, dadurch gekennzeichnet, daß der erste Förderweg (16A) mit dem zweiten Förderweg (18A) durch mindestens eine Wartungsgasse (24) verbunden ist, wobei Mittel zum Überführen (28,30) eines Transportfahrzeugs aus einem Förderweg in die Wartungsgasse und umgekehrt sowie Mittel zum Verfahren von Transportfahrzeugen in der Wartungsgasse vorhanden sind, und wobei in der Wartungsgasse ein Reverse-Transportfahrzeug (26) zum Austausch gegen eines der Transportfahrzeuge in den Förderwegen (16A,18A) bereitsteht.

## Beschreibung

Die Erfindung betrifft eine Vorrichtung zum Zuführen von Gegenständen an eine Verarbeitungseinheit, mit einem ersten Lager für die Gegenstände, das entlang einer ersten Seite der Verarbeitungseinheit angeordnet ist und einen ersten Förderweg aufweist, auf dem mindestens ein Transportfahrzeug zum Einlagern, Aufnehmen und Ausgeben von Gegenständen in das und aus dem Lager verfahrbar ist, und mit einem zweiten Lager für die Gegenstände, das entlang einer zweiten Seite der Verarbeitungseinheit angeordnet ist und einen zweiten Förderweg aufweist, auf dem mindestens ein Transportfahrzeug zum Einlagern, Aufnehmen und Ausgeben von Gegenständen in das und aus dem zweiten Lager verfahrbar ist.

Eine gattungsgemäße Vorrichtung ist bspw. aus der Druckindustrie bekannt, wobei sich eine zentral angeordnete Druckmaschine als Verarbeitungseinheit zwischen zwei auf beiden Seiten der Druckmaschine parallel zueinander angeordneten Tageslagern für die Druckpapierrollen befindet. Obwohl mit zwei parallel arbeitenden Tageslagern eine relativ hohe Ausfallsicherheit gegeben ist, kann es im Falle einer Störung eines Förderfahrzeugs in einem der Tageslager durchaus zu Versorgungsengpässen kommen, wenn das betreffende Regalfahrzeug nicht kurzfristig instand gesetzt werden kann. Außerdem sind Zugänglichkeit und Austausch eines Förderfahrzeugs aufgrund der räumlich begrenzten Lagergassen häufig ein Problem.

Die Aufgabe der Erfindung besteht darin, die genannten Probleme zu lösen und eine gattungsgemäße Vorrichtung zum Zuführen von Gegenständen dahingehend weiterzuentwickeln, das ein Transport- bzw. Förderfahrzeug eines der Lager schnell und kostengünstig repariert bzw. ausgetauscht werden kann.

Diese Aufgabe wird erfindungsgemäß bei einer gattungsgemäßen Vorrichtung dadurch gelöst, daß der erste Förderweg mit dem zweiten Förderweg durch mindestens eine Wartungsgasse verbunden ist, wobei Mittel zum Überführen eines Transportfahrzeugs aus einem Förderweg in die Wartungsgasse und umgekehrt sowie Mittel zum Verfahren von Transportfahrzeugen in der Wartungsgasse vorhanden sind, und wobei in der Wartungsgasse ein Reserve-Transportfahrzeug zum Austausch gegen eines der Transportfahrzeuge in den Förderwegen bereitsteht.

Vorteilhafte Weiterbildungen der Erfindung sind in den Unteransprüchen aufgezeigt.

Die Erfindung wird nachfolgend anhand von Ausführungsbeispielen unter Bezugnahme auf eine Zeichnung beschrieben, wobe
- Fig. 1: in einer schematischen Draufsicht eine erfindungsgemäße Vorrichtung gemäß einer ersten Ausführungsform zeigt,
- Fig. 2: in einer schematischen Draufsicht eine Variante der erfindungsgemäßen Wartungsgasse zeigt,
- Fig. 3: eine erfindungsgemäße Vorrichtung zeigt, die über eine Fördereinrichtung mit einem Hauptlager verbunden ist und insbesondere zur Verarbeitung von Papierrollen ausgestaltet ist, mit vorgeschalteten Einrichtungen zum Abladen, Vereinzeln, Prüfen usw. von Papierrollen,
- Fig. 4: und 5 eine Quer- und eine ausschnittsweise Längsschnittansicht des Hauptlagers zeigen,
- Fig. 6: eine Querschnittsansicht der Vorrichtung zum Zuführen von Gegenständen zeigt,
- Fig. 7: eine schematische Draufsicht der dem Hauptlager vorgeschalteten Einrichtungen zum Abladen, Vereinzeln, Prüfen usw. von Papierrollen zeigt,
- Fig.8: eine schematische Draufsicht auf das Hauptlager aus der Anordnung nach Fig. 3 zeigt,
- Fig. 9: eine Variante der Anordnung gemäß Fig. 3 zeigt,
- Fig. 10 und 11: Seiten- und Schnittansichten einer in der Anordnung nach Fig. 9 verwendeten Hängefördereinrichtung zeigen,
- Fig. 12: das Hauptlager entsprechend der Variante gemäß Fig. 9 zeigt, und
- Fig. 13: die erfindungsgemäße Vorrichtung zum Zuführen von Gegenständen als Teil der Ausführungsform nach Fig. 9 zeigt.

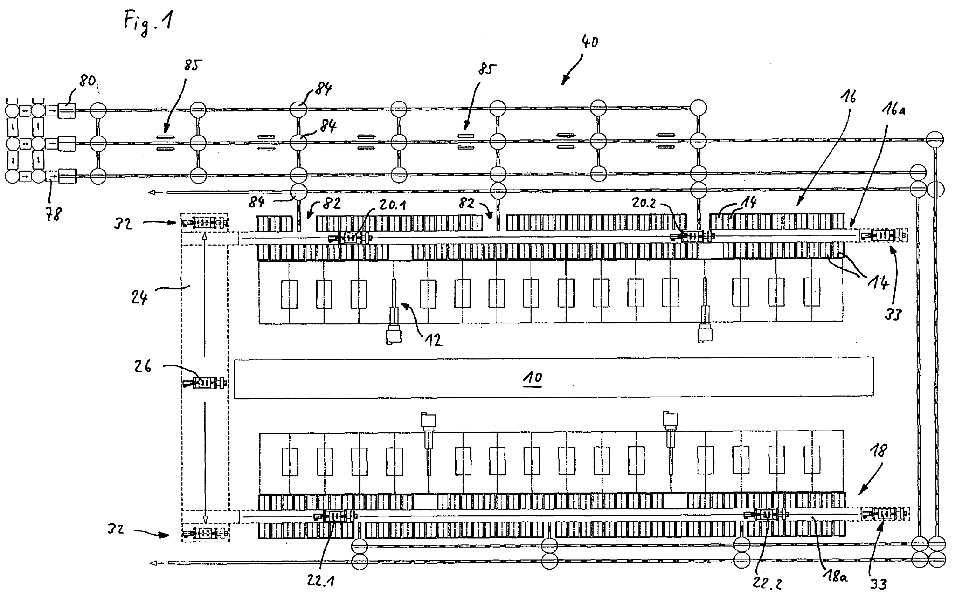

Fig. 1 zeigt eine erfindungsgemäße Vorrichtung zum Zuführen von Gegenständen in einer schematisierten Draufsicht, wobei die Verarbeitungseinheit, der die Gegenstände zugeführt werden, im dargestellten Beispiel eine Druckmaschine 10 ist und es sich bei den Gegenständen um Papierrollen handelt. Beiderseits unmittelbar benachbart zu der Druckmaschine 10 sind eine Reihe von Rollenständern 12 angeordnet, die die Papierrollen 14 vor deren Übergabe an die Druckmaschine aufnehmen.

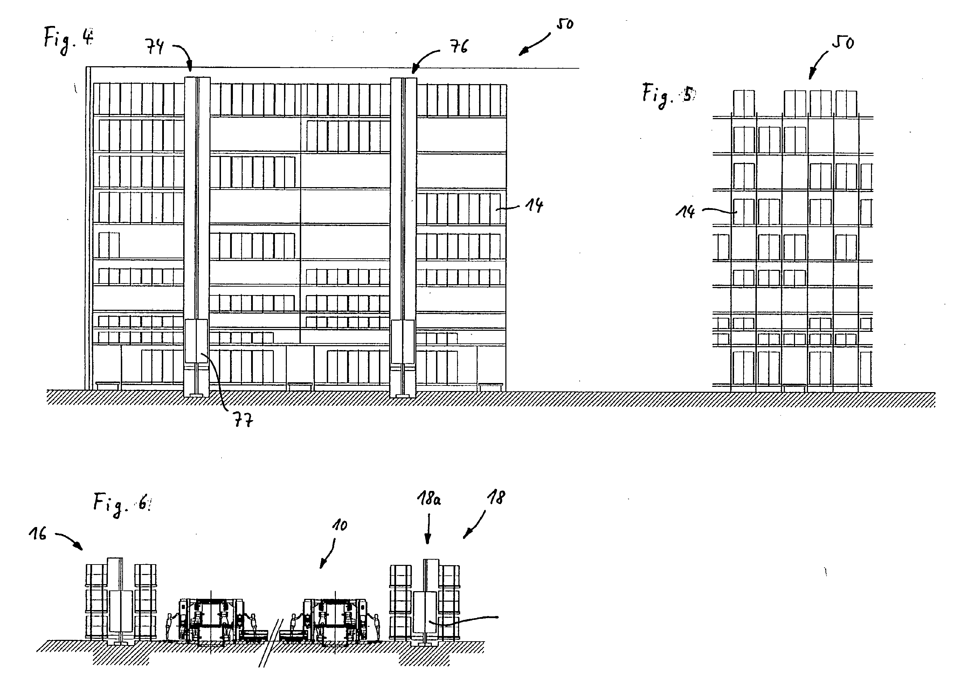

Die Funktion der erfindungsgemäßen Vorrichtung besteht darin, sämtliche Rollenständer 12 mit Papierrollen beschickt zu halten. Hierfür sind ein erstes Zwischenlager 16 und ein zweites Zwischenlager 18 vorgesehen, die jeweils Tageslager für die Druckmaschine bilden. Beide Zwischenlager sind als Hochregallager mit mehreren Etagen ausgebildet und weisen jeweils eine zentrale Lagergasse 16a, 18a auf, an der beiderseits Lagerplätze für Papierrollen 14 gebildet sind. Fig. 6 zeigt eine schematische Querschnittsansicht durch Druckmaschine und Zwischenlager, wobei drei Lageretagen der Zwischenlager dargestellt sind.

In jeder Lagergasse sind zwei Regalfahrzeuge 20.1, 20.2 und 22.1, 22.2 auf einem nicht näher dargestellten, an sich bekannten Schienensystem in Längsrichtung der jeweiligen Gasse verfahrbar angeordnet. Ein derartiges Regalfahrzeug ist bspw. aus den deutschen Gebrauchsmustern 299 03 671.5 und 201 05 388.8 bekannt und weist eine quer zur Verfahrrichtung ausfahrbare Gabel oder sonstige Aufnahmeeinrichtung für eine Papierrolle auf, die in Vertikalrichtung bewegbar ist. Selbstverständlich könnte in jeder Lagergasse eine andere Zahl von Regalfahrzeugen vorgesehen sein, bspw. nur eines oder auch drei oder mehr.

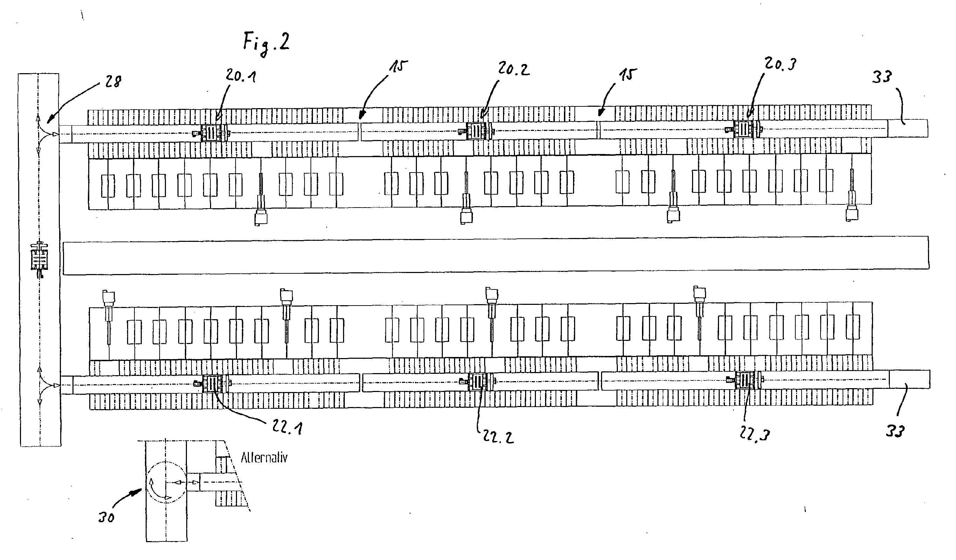

Jedes der genannten Regalfahrzeuge ist innerhalb der gesamten jeweiligen Lagergasse verfahrbar, wobei eine mittels Lichtschranken oder über eine programmierbare Steuerung realisierte Abstandsüberwachung vorgesehen ist, die Kollisionen verhindert. In Fällen kleinerer Wartungen bzw. Reparaturen, die in der Lagergasse selbst erfolgen können, wird eine vorübergehende Trennung eingerichtet, die zum Schutz der die Wartung ausführenden Arbeitskräfte dient und in Fig. 2 mit 15 bezeichnet ist. In einem solchen Fall wird den Regalfahrzeugen für eine relativ kurze Dauer ein begrenzter Arbeitsbereich zugewiesen.

Erfindungsgemäß ist an einer Seite bzw. an stirnseitigen Endabschnitten der Tageslager eine Wartungsgasse 24 angeordnet, in der ein Reserve-Regalfahrzeug 26 zum Austausch gegen ein möglicherweise defekt gewordenes Regalfahrzeug 20 oder 22 bereitsteht. Eines oder mehrere der Regalfahrzeuge 20 bzw. 22 können in die Wartungsgasse 24 verbracht werden, was bspw. mit einem Kran, mit viertelkreisförmig gebogenen Schienenabschnitten 28 oder auch mit einer Drehplattform 30 realisiert werden kann, wie dies in Fig. 2 angedeutet ist. Auch könnten bewegliche Plattformen in der Wartungsgasse 24 bereitstehen, auf die die Regalfahrzeuge gefahren werden und auf denen sie dann in Längsrichtung der Wartungsgasse verfahrbar sind. Fig. 2 zeigt eine Variante mit drei Regalfahrzeugen 20.1 bis 20.3 und 22.1 bis 22.3.

Eine Vorgehensweise beim Austausch eines Regalfahrzeugs könnte wie folgt aussehen. Wenn bspw. das Regalfahrzeug 20.2 defekt ist und ausgetauscht werden soll, fährt zunächst das Reserve-Regalfahrzeug 26 auf einen von zwei an den Endabschnitten der Wartungsgasse vorgesehenen Pufferbereichen 32, und zwar im vorliegenden Fall auf denjenigen Pufferbereich, der der betreffenden Wartungsgasse 16a zunächstliegt. Anschließend fahren die beiden Regalfahrzeuge 20 nacheinander in die Wartungsgasse, und das Reserve-Regalfahrzeug 26 fährt aus dem Pufferbereich und an die Stelle der Lagergasse 16a, an der sich das defekte Regalfahrzeug 20.2 ursprünglich befand. Danach fährt das Regalfahrzeug 20.1 zurück an seinen ursprünglichen Platz. Das Regalfahrzeug 20.2 kann nun gewartet werden, während der Betrieb des ersten Tageslagers ungehindert fortgesetzt werden kann.

Ferner sind an der Wartungsgasse gegenüberliegenden Enden der Lagergassen Abstellbereiche 33 vorhanden, die auch für kleinere Wartungsarbeiten genutzt werden können.

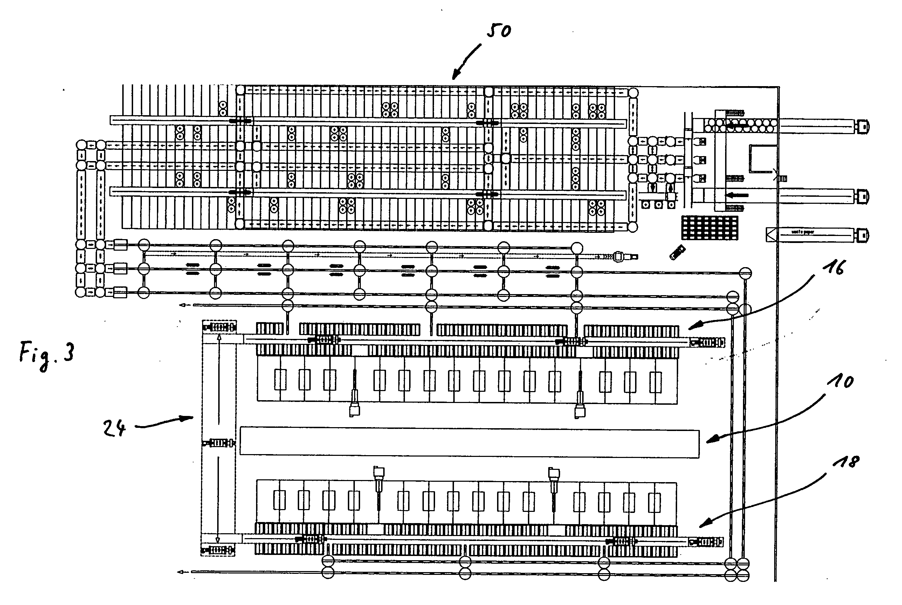

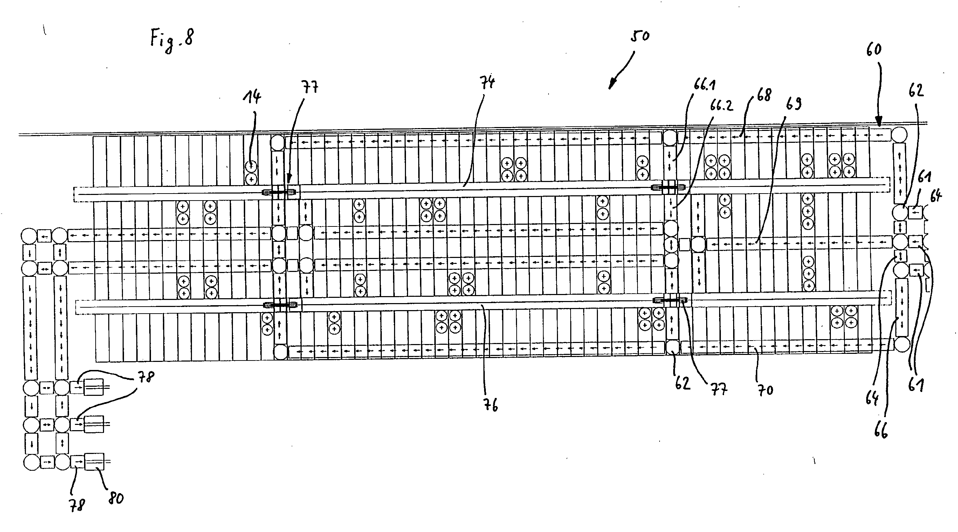

Fig. 1 zeigt ferner eine für die vorliegende Erfindung zweckmäßige, im ganzen mit 40 bezeichnete Fördereinrichtung, über die die beiden Zwischenlager 16, 18 aus einem vorgeschalteten Hauptlager mit Papierrollen versorgt werden. Fig. 3 zeigt ein derartiges Hauptlager 50 im Zusammenhang mit weiteren, noch zu erläuternden Komponenten, wobei das Hauptlager 50 in Fig. 8 in Einzeldarstellung gezeigt ist.

Unter Bezugnahme auf Fig. 8 besteht das Hauptlager 50 nach Art eines Hochregallagers aus einer Anzahl von Lagergassen, benachbart zu denen eine große Anzahl von Lagerplätzen für Papierrollen in mehreren Ebenen übereinander angeordnet sind. Im vorliegenden Beispiel ist das Hauptlager zur Aufnahme und Handhabung von Papierrollen 14 in stehender Position ausgelegt. Von dem Hauptlager vorgeschalteten, noch zu erläuternden Einrichtungen zum Abladen der Papierrollen von Anlieferungsfahrzeugen, Vereinzeln, Auspacken, Prüfen, Vermessen und Reparieren kommend, werden die Papierrollen dem Hauptlager 50 an dessen Eingangsseite (in Fig. 8 am rechten Rand der Darstellung) über eine im ganzen mit 60 bezeichnete Beschickungsfördereinrichtung zugeführt, die im vorliegenden Beispiel durch Bodenförderer (Stetigförderer) gebildet ist. Drei parallel arbeitende Eingangsförderer 61 bringen die Papierrollen auf Drehplattformen 62, auf denen sie über umsteuerbare 64 oder in einer vorgegebenen Richtung arbeitende Verteilförderer 66 weiteren Beschickungsförderabschnitten 68, 69 oder 70 zugeführt werden, die wiederum zu Drehplattformen 62 führen, von denen quer verlaufende Verteilförderer abgehen usw. so daß das gesamte Hauptlager 50 fördertechnisch erschlossen ist, wie Fig. 8 zeigt.

Das Hauptlager 50 weist ferner zwei parallel angeordnete Lagergassen 74, 76 auf, in denen jeweils zwei Regalfahrzeuge 77 arbeiten. Im Unterschied zu den Regalfahrzeugen 20, 22 der Tageslager 16, 18 sind die Regalfahrzeuge 77 jeweils mit einem eigenständig angetriebenen, selbständig quer zur Längsrichtung der Lagergassen 74, 76 verfahrbaren Hubwagen ("Satellit") versehen, dessen Aufgabe darin besteht, eine in einem Abstand von der Lagergasse befindliche Papierrolle aufzunehmen und zu der Lagergasse und dem Regalfahrzeug zu transportieren, damit dieses die Rolle dann in Gassenlängsrichtung zu einem der quer angeordneten Verteilförderer oder auch zu einem anderen Lagerplatz bringen kann.

Außerdem verfügen die Regalfahrzeuge 77 jeweils über einen in Höhe der Beschickungsfördereinrichtung 60 angeordneten Querförderer, so daß Papierrollen, die von einem auf einer Seite einer Lagergasse angeordneten Verteilfördererabschnitt (z.B. 66.1) zu einem gegenüberliegenden, auf der anderen Seite der Lagergasse befindlichen Verteilfördererabschnitt (z..B. 66.2) gelangen sollen, über den Querförderer eines Regalfahrzeugs geleitet werden können, der somit die Lagergasse gleichsam überbrückt.

Fig. 4 und 5 zeigen eine Querschnitts- und eine ausschnittsweise Längsschnittansicht des Hauptlagers, aus denen hervorgeht, daß die Papierrollen 14 und damit auch die übereinander angeordneten Lagerebenen nicht stets die gleiche Höhe haben müssen, sondern daß es relativ hohe bzw. lange und relativ niedrige bzw. kurze Papierrollen 14 gibt. Darüber hinaus kann die Zuordnung der einzelnen Papierrollen 14 zu bestimmten Lagerplätzen des Hauptlagers 50 (und ggf. auch in den Tageslagern 16, 18) nach bestimmten Parametern erfolgen, die für einzelne Papierrollen kennzeichnend sind, z.B. Rollengröße und -gewicht, Papiergewicht und -qualität usw..

Aus dem Hauptlager 50 kommende Papierrollen gelangen analog zu den Eingangsförderern über drei parallel arbeitende Ausgangsförderer 78 an Übergabe- und Kippstationen 80, an denen die Papierrollen in eine horizontale Lage gebracht werden. Wie Fig. 1 zeigt, stellen die Übergabe- und Kippstationen 80 den Anschluß an die Fördereinrichtung 40 zu den Tageslagern 16, 18 her.

Die Fördereinrichtung 40 ist teilweise redundant ausgelegt und dient der weitestgehend störungs- und unterbrechungsfreien Zuführung von Papierrollen an die Tageslager. Die Fördereinrichtung 40 beinhaltet herkömmliche Kettentransporttechnik und weist in regelmäßigen Abständen, insbesondere an Eingangsbereichen 82 des Tageslagers, Drehplattformen 84 zur Steuerung und ggf. Umleitung des Materialflusses auf.

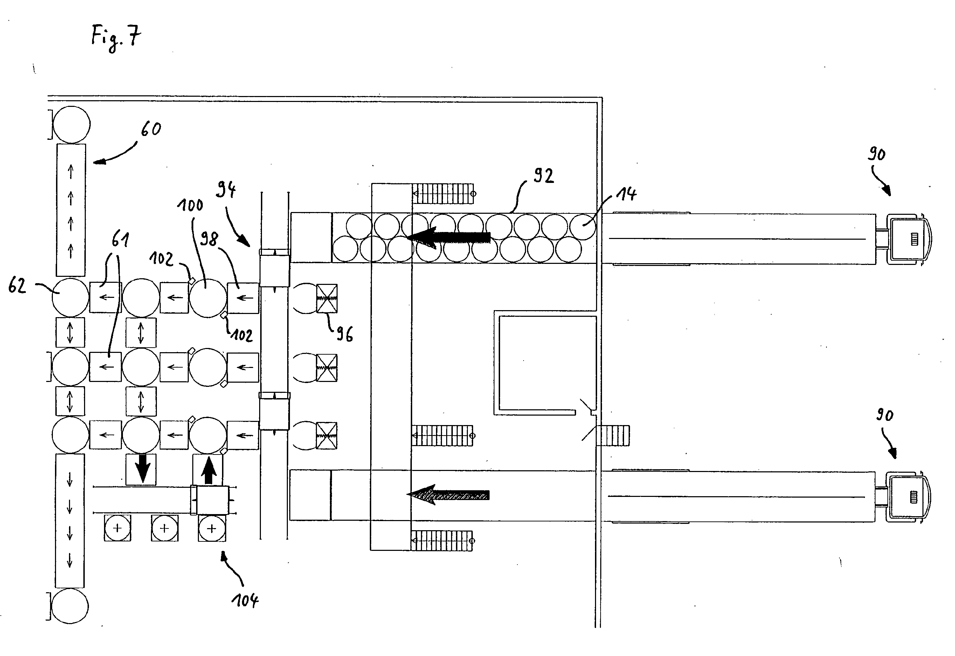

Fig. 7 erläutert die bereits erwähnten Einrichtungen zum automatischen Abladen, Vereinzeln, Prüfen usw. der einzelnen Papierrollen, bevor diese über die Eingangsförderer 61 dem Hauptlager 50 zugeführt werden. Die Papierrollen 14 werden von Lastkraftwagen 90 entladen, wobei meist jeweils zwei Papierrollen übereinanderstehen, und gelangen auf Förderbändern 92 zu einer Vereinzelungseinrichtung 94, die unter anderem Greifer 96 zum Anheben und Absetzen von Papierrollen aufweist.

Zwischenförderer 98 bringen die einzelnen Papierrollen zu einem rotierenden Meßtisch 100, auf dem jede Rolle um 180° gedreht wird. Zwei senkrecht angeordnete, gegenüberliegende Lichtschranken 102 tasten die Kontur der Papierrolle ab. Sofern Fehler festgestellt werden, wird die betreffende Papierrolle einer Reparaturstation 104 zugeführt. Ansonsten werden die Rollen an die Eingangsförderer 61 weitergegeben und gelangen ins Hauptlager 50.

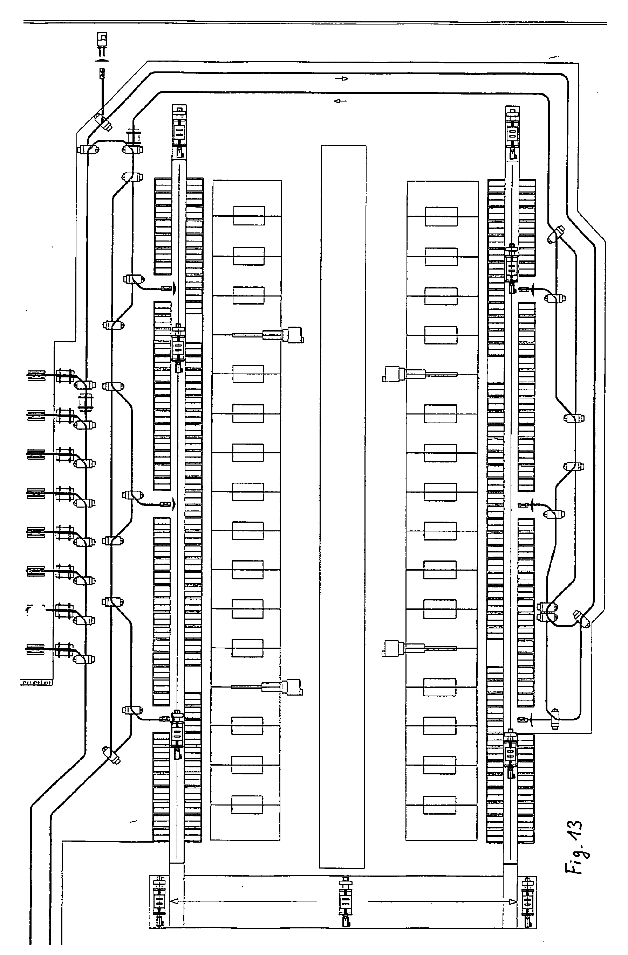

Das Auspacken der Papierrollen sowie die Klebevorbereitung erfolgt an Auspack- und Klebstellenvorbereitungsstationen 85 (Fig. 1, 12) vor der Zuführung ins Tageslager. Die Klebevorbereitung kann alternativ auch unmittelbar am Rollenwechsler durchgeführt werden, d.h. im Bereich der Rollenständer 12. Nach der Klebevorbereitung an der Auspackstation wird die betreffende Papierrolle unmittelbar ins Tageslager gebracht. Wird die Papierrolle erst am Rollenwechsler mit einem Klebestreifen versehen, erfolgt keine Rücklagerung in das Tageslager, sondern unmittelbar die Zuführung an die Druckmaschine 10.

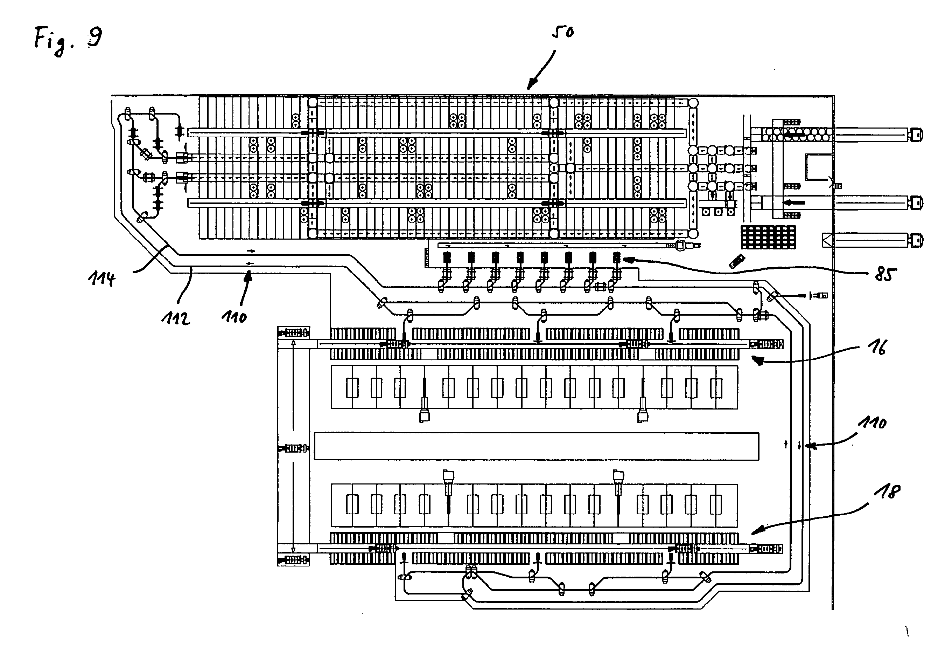

Fig. 9 bis 13 zeigen eine Variante der Erfindung, bei der die Fördertechnik ausgehend vom Ausgang aus dem Hauptlager bis zur Übergabe an die Tageslager als Hängefördertechnik (Elektrohängebahn) ausgeführt ist. Wie die Pfeile 110 andeuten, sind die Schienenwege 112, 114 zwischen Hauptlager und Tageslager endlos umlaufend geführt.

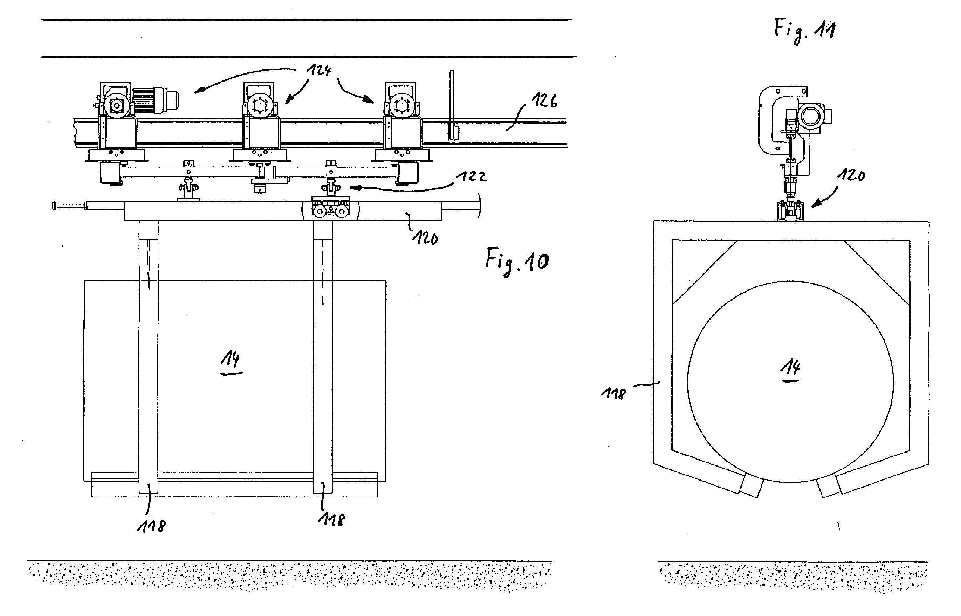

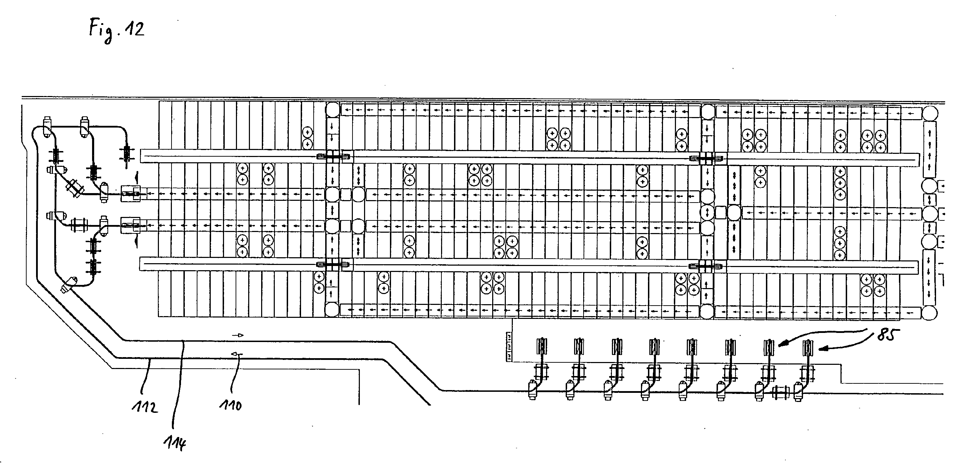

Fig. 10 und 11 zeigen Seiten- und Querschnittsansichten der verwendeten Elektrohängeförderer, wobei eine Papierrolle 14 in liegender Position von zwei C-förmigen Trägern 118 gehalten ist, die an einem Längsrahmen 120 befestigt sind. Der Längsrahmen 120 ist über gelenkige Aufhängungen 122 an Rollenträgern 124 aufgehängt, von denen einer mit einem Elektromotor zur Verfahrbewegung entlang einer Tragschiene 126 angetrieben ist. Mittels eines Verstellhebels 128 kann die Längsausrichtung des Längsrahmens 120 und damit die der Papierrolle 14 relativ zur Fahrtrichtung bzw. zur Tragschiene 126 verändert werden.

### Bezugszeichenliste

- 10: Druckmaschine
- 12: Rollenständer
- 14: Papierrollen
- 15: Trennung
- 16: erstes Lager (Tageslager)
- 18: zweites Lager (Tageslager)
- 16a, 18a: Lagergasse
- 20.1, 20.2, 20.3: Regalfahrzeug
- 22.1, 22.2, 22.3: Regalfahrzeug
- 24: Wartungsgasse
- 26: Reserve-Regalfahrzeug
- 28: viertelkreisförmiger Schienenabschnitt
- 30: Drehplattform
- 32: Pufferbereich
- 33: Abstellbereich
- 40: Fördereinrichtung
- 50: Hauptlager
- 60: Beschickungsfördereinrichtung
- 61: Eingangsförderer
- 62: Drehplattform
- 64: umsteuerbare Verteilförderer
- 66: Einwege-Verteilförderer
- 68, 69, 70: Beschickungsförderabschnitt
- 74, 76: Lagergasse
- 77: Regalfahrzeug
- 78: Ausgangsförderer
- 80: Übergabe- und Kippstation
- 82: Eingangsbereich des Tageslagers
- 84: Drehplattform
- 85: Auspack- und ggf. Klebestellenvorbereitungsstation
- 90: LKW
- 92: Förderband
- 94: Vereinzelungseinrichtung
- 96: Greifer
- 98: Zwischenförderer
- 100: Meßtisch
- 102: Lichtschranke
- 104: Reparaturstation
- 110: Pfeil
- 112, 114: Schienenweg
- 118: Träger
- 120: Längsrahmen
- 122: gelenkige Aufhängung
- 124: Rollenträger
- 126: Tragschiene
- 128: Verstellhebel

## Patentansprüche

1. Vorrichtung zum Zuführen von Gegenständen (14) an eine Verarbeitungseinheit (10), mit einem ersten Lager (16) für die Gegenstände, das entlang einer ersten Seite der Verarbeitungseinheit (10) angeordnet ist und einen ersten Förderweg (16a) aufweist, auf dem mindestens ein Transportfahrzeug (20) zum Einlagern, Aufnehmen und Ausgeben von Gegenständen (14) in das und aus dem Lager (16) verfahrbar ist, und mit einem zweiten Lager (18) für die Gegenstände, das entlang einer zweiten Seite der Verarbeitungseinheit (10) angeordnet ist und einen zweiten Förderweg (18a) aufweist, auf dem mindestens ein Transportfahrzeug (22) zum Einlagern, Aufnehmen und Ausgeben von Gegenständen in das und aus dem zweiten Lager (18) verfahrbar ist, **dadurch gekennzeichnet, daß** der erste Förderweg (16a) mit dem zweiten Förderweg (18a) durch mindestens eine Wartungsgasse (24) verbunden ist, wobei Mittel zum Überführen (28, 30) eines Transportfahrzeugs aus einem Förderweg in die Wartungsgasse und umgekehrt sowie Mittel zum Verfahren von Transportfahrzeugen in der Wartungsgasse vorhanden sind, und wobei in der Wartungsgasse ein Reserve-Transportfahrzeug (26) zum Austausch gegen eines der Transportfahrzeuge in den Förderwegen (16a, 18a) bereitsteht.

2. Vorrichtung nach Anspruch 1, **dadurch gekennzeichnet, daß** an Übergangsbereichen zwischen den Förderwegen (16a, 18a) und der Wartungsgasse (24) mindestens ein Pufferbereich (32) zum vorübergehenden Aufnehmen mindestens eines Transportfahrzeugs gebildet ist.

3. Vorrichtung nach Anspruch 1 oder 2, **dadurch gekennzeichnet, daß** an der Wartungsgasse (24) abgekehrten Endabschnitten der Förderwege (16a, 18a) mindestens ein Abstellbereich (33) für ein Transportfahrzeug gebildet ist.

4. Vorrichtung nach einem der vorangehenden Ansprüche, **dadurch gekennzeichnet, daß** die Förderwege (16a, 18a) des ersten und/oder zweiten Lagers (16, 18) als Lagergassen mit beiderseits davon angeordneten Lagerplätzen in mehreren vertikal übereinanderliegenden Lagerebenen ausgebildet sind.

5. Vorrichtung nach Anspruch 4, **dadurch gekennzeichnet, daß** die Transportfahrzeuge (20, 22) als Regalfahrzeuge mit quer zur Verfahrrichtung ausfahrbarer Aufnahmeeinrichtung für Gegenstände, insbesondere Teleskopgabel oder dreh- und schiebbare Gabel, ausgebildet sind.

6. Vorrichtung nach einem der vorangehenden Ansprüche, **dadurch gekennzeichnet, daß** in jedem Förderweg mehrere Transportfahrzeuge angeordnet sind, wobei im Wartungsfall mittels einer aufhebbaren Trennung (15) eigene Arbeitsbereiche einzelner Transportfahrzeuge kollisionssicher voneinander abgrenzbar sind, um kleinere Wartungsarbeiten unmittelbar in der Lagergasse ausführen zu können.

7. Vorrichtung nach einem der vorangehenden Ansprüche, **dadurch gekennzeichnet, daß** die Mittel zur Überführung eines Transportfahrzeugs in die Wartungsgasse (24) einen Kran umfassen.

8. Vorrichtung nach einem der vorangehenden Ansprüche, **dadurch gekennzeichnet, daß** die Mittel zum Verfahren eines Transportfahrzeugs in der Wartungsgasse ein Schienensystem oder eine verfahrbare Plattform umfassen.

9. Vorrichtung nach einem der vorangehenden Ansprüche, **dadurch gekennzeichnet, daß** an Übergangsbereichen zwischen Förderwegen (16a, 18a) und Wartungsgasse (24) Drehplattformen (30) zum Umsetzen von Transportfahrzeugen auf ein Mittel zum Verfahren, insbesondere eine Fahrschiene der Wartungsgasse angeordnet ist.

10. Vorrichtung nach einem der vorangehenden Ansprüche, **dadurch gekennzeichnet, daß** die Gegenstände Papierrollen (14) und die Verarbeitungseinheit eine Druckmaschine (10) ist.

11. Vorrichtung nach Anspruch 10, **dadurch gekennzeichnet, daß** beide Lager als Tageslager (16, 18) ausgebildet sind und über eine, insbesondere endlos umlaufend geführte, Fördereinrichtung (40) mit einem Hauptlager (50) verbunden sind.

12. Vorrichtung nach Anspruch 11, **dadurch gekennzeichnet, daß** die Fördereinrichtung (40) Bodenförderer und/oder Hängeförderer und/oder eine Elektrohängebahn aufweist.

13. Vorrichtung nach einem der Ansprüche 11 oder 12, **dadurch gekennzeichnet, daß** das Hauptlager (50) mindestens eine Lagergasse (74, 76) mit beiderseits davon angeordneten Lagerplätzen in mehreren übereinander angeordneten Lagerebenen aufweist.

14. Vorrichtung nach Anspruch 13, **dadurch gekennzeichnet, daß** in mindestens einer Lagerebene mehrere Lagerplätze hintereinander (quer zur Lagergassenlängsrichtung) angeordnet sind.

15. Vorrichtung nach Anspruch 14, **dadurch gekennzeichnet, daß** in der mindestens einen Lagergasse (74, 76) mindestens ein Regalfahrzeug (77) angeordnet ist, das (jeweils) in Lagergassenlängsrichtung verfahrbar ist und einen selbständig angetriebenen, quer dazu verfahrbaren Hubwagen ("Satellit") aufweist.

16. Vorrichtung nach einem der Ansprüche 11 bis 15, **dadurch gekennzeichnet, daß** das Hauptlager (50) zur Beschickung der Lagerplätze mit Papierrollen eine Beschickungsfördereinrichtung (60), insbesondere als Stetigförderer ausgebildet, aufweist.

17. Vorrichtung nach Anspruch 16, **dadurch gekennzeichnet, daß** jeweils mindestens ein Beschickungsförderweg (68, 69, 70) zwischen zwei benachbarten Lagergassen (74, 76) und entlang der Längsseiten des Hauptlagers angeordnet ist.

18. Vorrichtung nach Anspruch 17, **dadurch gekennzeichnet, daß** in Abständen quer zu den Beschickungsförderwegen (68, 69, 70) Verteilförderwege (66, 66.1, 66.2) und an deren Kreuzungspunkten mit den Beschickungsförderwegen Drehplattformen (62) angeordnet sind.

19. Vorrichtung nach einem der Ansprüche 13 bis 18, **dadurch gekennzeichnet, daß** das Hauptlager Regalfahrzeuge (77) aufweist, die einen quer zur Lagergassenlängsrichtung arbeitenden Querförderer aufweisen, um Papierrollen, insbesondere entlang der Verteilförderwege, über eine Lagergasse (74, 76) hinweg zu transportieren.

20. Vorrichtung nach einem der Ansprüche 11 bis 19, **dadurch gekennzeichnet, daß** das Hauptlager zur stehenden Lagerung und Förderung und die Tageslager zur liegenden Lagerung und Förderung von Papierrollen ausgebildet sind, wobei anschließend an eine Beschickungsfördereinrichtung (60) des Hauptlagers Übergabe- und Kippstationen (80) vorgesehen sind, an die sich die Fördereinrichtung (40) zur Verbindung mit den Tageslagern (16, 18) anschließt.

21. Vorrichtung nach einem der Ansprüche 11 bis 20, **dadurch gekennzeichnet, daß** einer Beschickungsfördereinrichtung (60) des Hauptlagers (50) Einrichtungen zum Prüfen, Vermessen und Reparieren (100, 102, 104) von Papierrollen vorgeschaltet sind.

22. Vorrichtung nach Anspruch 21, **dadurch gekennzeichnet, daß** den Einrichtungen zum Prüfen, Vermessen und Reparieren von Papierrollen eine Einrichtung (92, 94, 96) zum automatischen Abladen und Vereinzeln von Papierrollen (14) vorgeschaltet ist.

23. Vorrichtung nach einem der Ansprüche 11 bis 22, **gekennzeichnet durch** mindestens eine Auspackstation (85) für Papierrollen, die zwischen Hauptlager (50) und Tageslager (16, 18) angeordnet ist.

24. Vorrichtung nach Anspruch 23, **dadurch gekennzeichnet, daß** mindestens eine Auspackstation (85) gleichzeitig als Klebestellenvorbereitungsstation ausgebildet ist.
